# EUROPEAN PATENT SPECIFICATION

(11) **EP 2 031 734 B1**
(45) Date of publication and mention of the grant of the patent: **20.03.2013**
(21) Application number: 08168747.7
(22) Date of filing: 25.09.2002
(51) Int. Cl.: H02K 3/34

(54) **Rotary electrical machine with a coil insulation member**
Elektrische Maschine mit einer Spulenisolierung
Machine électrique avec une isolation d'enroulement

(30) Priority: 28.09.2001 JP 2001299926; 28.09.2001 JP 2001299944
(43) Date of publication of application: 04.03.2009
(62) Divisional of application: 02768065.1
(73) Proprietor: NIKKISO COMPANY, LTD., Shibuya-ku, Tokyo 150-8677 (JP)
(72) Inventor: Wada, Yoshihiko, c/o Nikkiso Co., Ltd., Tokyo 189-8520 (JP); Ogura, Akira, c/o Nikkiso Co., Ltd., Tokyo 189-8520 (JP); Eguchi, Masaaki, c/o Nikkiso Co., Ltd., Tokyo 189-8520 (JP); Koide, Masamichi, Kanagawa 253-0087 (JP)
(74) Representative: GROSSE SCHUMACHER KNAUER VON HIRSCHHAUSEN

(56) References cited:
- FR-A- 2 341 923
- GB-A- 852 150
- GB-A- 996 901
- JP-A- 58 170 334
- JP-A- 59 117 434
- JP-A- 61 066 553
- JP-U- 60 086 045
- US-A- 3 214 621
- US-A- 3 710 437
- US-A- 4 013 987

## Description

### FIELD OF THE INVENTION

The present invention relates to a rotary electrical machine, and, in particular, to a structure of a slot liner placed within slots of a core of a motor for insulating between the core and coil conductors.

### BACKGROUND OF THE INVENTION

In a coil of an electrical machine, an insulation member is provided for ensuring insulation between a core and the coil of the electrical machine. A rotary electrical machine, such as an electrical motor, an electrical generator, or the like which is an electrical machine, has a core with a plurality of teeth. A coil conductor is stored in a space between the teeth, that is, in a slot. In order to ensure insulation between the coil conductor and the core, a sheet-shaped insulation member called a "slot liner" is placed between the coil conductor and the core.

In a rotary electrical machine or the like which is used under a high temperature environment, the insulation member also requires an adequate heat resistance. Typically, mica is used in this type of insulation member. There are two types of mica insulation member, one in the form of fine flakes and the other in the form of a thin film peeled from a mica stone. The fine flakes of mica put together through a resin is called "aggregated mica" and a few thin films of mica peeled from a mica stone which are attached together are called "peeled mica".

In an insulation member formed using the aggregated mica as described above, the heat resistance of the resin connecting the pieces of mica may sometimes be inadequate. In addition, because the material is brittle, there is a possibility that a hole may be formed during manufacture or a hole may be formed through vibrations and the like that occur while using rotary electrical machines, which may result in dielectric breakdown. An insulation member which uses the peeled mica, on the other hand, is weak against bending and may break when the insulation member is placed within the slot, causing dielectric breakdown. In addition, the peeled mica is expensive.

Moreover, a sheet-shaped insulation member using mica is weak against bending or the like, and, in particular, there had been a problem in that load may be applied when a portion of the coil which protrudes from the core end, which is called a coil end portion, is formed, and thus, the insulation member is easily damaged in this process. When this damage is problematic, conventionally, sheets of a material having relatively high mechanical strength, such as a resin, are layered on the insulation member to form a slot liner, the sheets having approximately the same size as the insulation member.

The layer of reinforcement resin of the slot liner described above is placed between the coil and core. Because of this, there had been a problem in that the resin may expand or deform under a high temperature and may be detached from the core, blocking transfer, to the core, of heat generated within the coil, to thereby reduce the heat dissipating ability of the coil.

Document FR 2 341 923 A and US 3 710 437 A describe rotary electrical machines having coils of a conductor placed in a slot of a core. Both documents show a slot liner placed within the core and the coil for insulating the coil and the core. The slot liner is formed of insulation sheets comprising mica. The insulation sheets comprising mica are liable to be damaged during assembly or handling of the rotary electrical machine.

Document JP 59 117434 A shows a rotary electrical machine according to the features of the preamble of claim 1 of the invention. The rotary electrical machine has coils of a conductor placed in a slot of a core. A slot liner is placed within the core and the coil for insulating the coil and the core. The slot liner comprises a primary insulation sheet and a reinforcement sheet, wherein the primary insulation sheet is folded for reinforcing the primary insulation sheet at a position near a core edge. The primary insulation sheet is liable to damage during assembly, and is difficult to apply for all types of materials of the primary insulation sheet.

### SUMMARY OF THE INVENTION

The present invention was conceived in view of the above-described problems, and an object of the present invention is to improve strength in an insulation member in a coil of an electrical machine. Another object of the present invention is to ensure the strength of a slot liner of a rotary electrical machine, prevent dielectric breakdown, and enhance the ability of the coil to dissipate heat.

In order to solve the above -described problems, a rotary electrical machine according to claim 1 of the invention is provided. The rotary electrical machine comprises a rotor including a rotational shaft, a stator including a core in which a slot is formed, and a slot liner to be placed within the slot of the core for insulating a conductor placed within the slot and the core. The slot liner comprising: a primary insulation sheet placed extending along the direction of the shaft of the rotary electrical machine and having a length which is longer than that of the core; and reinforcement sheets which are separately placed near ends of the core. The reinforcement sheets are spaced from one another, and are placed overlapping a portion of the primary insulation sheet at positions of the primary insulation sheet including core end surfaces. The reinforcement sheets are placed at least between the core and the primary insulation sheet for reinforcing the primary insulation sheet against a load applied to the primary insulation sheet. Each reinforcement sheet is folded, and a fold crease corresponds to an end of the primary insulation sheet, to cover the end of the primary insulation sheet, respectively.

The primary insulation sheet is formed by layering at least one insulation sheet of peeled mica having a base member of peeled mica and at least one insulation sheet of aggregated mica having a base member of aggregated mica.

In a slot liner of a rotary electrical machine according to this aspect of the present invention, the reinforcement sheets are placed separately at both ends with a space therebetween. That is, a reinforcement sheet is placed near an end of a primary insulation sheet placed extending in a direction along the shaft of a rotary electrical machine within a slot for insulating the coil and core. The reinforcement sheets reinforce the primary insulation sheet near the core end and bear a portion of a load applied on the primary insulation sheet, for example, from the coil in working with the coil end or the like, to ensure insulation. The reinforcement sheet is not present at regions of the slot liner other than the ends, and therefore, the reinforcement sheet does not detach from the coil and block the heat transfer from the coil to the core.

The usage environment of the rotary electrical machine, in particular, temperature, must be considered for the reinforcement sheet. Because the insulation capability is reduced when a resin material is to be used and carbonization occurs due to the high temperature, a material which is suitable for the temperature condition must be selected.

### BRIEF DESCRIPTION OF DRAWINGS

Fig. 1 shows a schematic structure of a stator of an electrical motor which is an electrical machine according to the invention;
Fig. 2 shows placement of a slot liner within a slot of an electrical machine of Fig. 1;
Fig. 3 is a cross-sectional view of a known insulation sheet forming a slot liner of Fig. 2;
Fig. 4 is a cross-sectional view of an other insulation sheet forming a slot liner of Fig. 2;
Fig. 5 is a schematic cross-sectional view of an example of an electrical machine including a shaft and a stator core; and
Fig. 6 is a perspective view showing a reinforcement sheet of the invention.

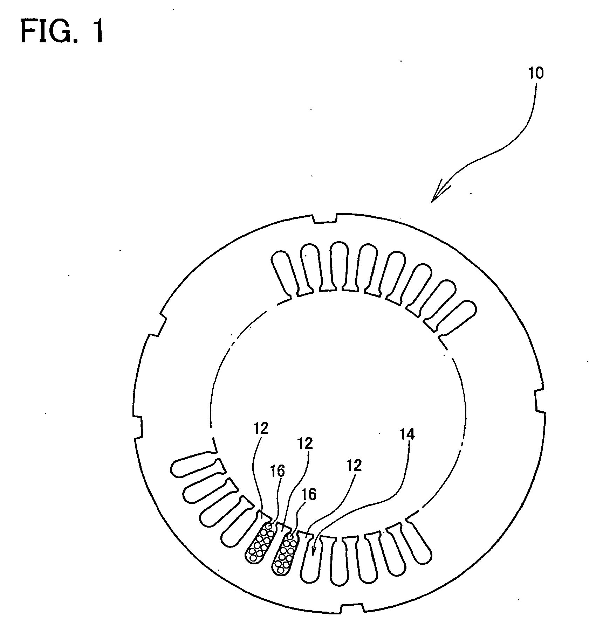

General structures will now be described referring to the drawings. Fig. 1 is a schematic cross sectional view of a stator of a rotary electrical machine such as an electrical motor and an electrical generator. A core 10 of the stator has an approximately cylindrical shape and teeth 12 are placed on an inner perimeter surface of the core, that is, a surface opposing a rotor, with a predetermined space in a circumferential direction. Conductors 16 which form a coil are placed within a slot 14 which is the space between the teeth 12.

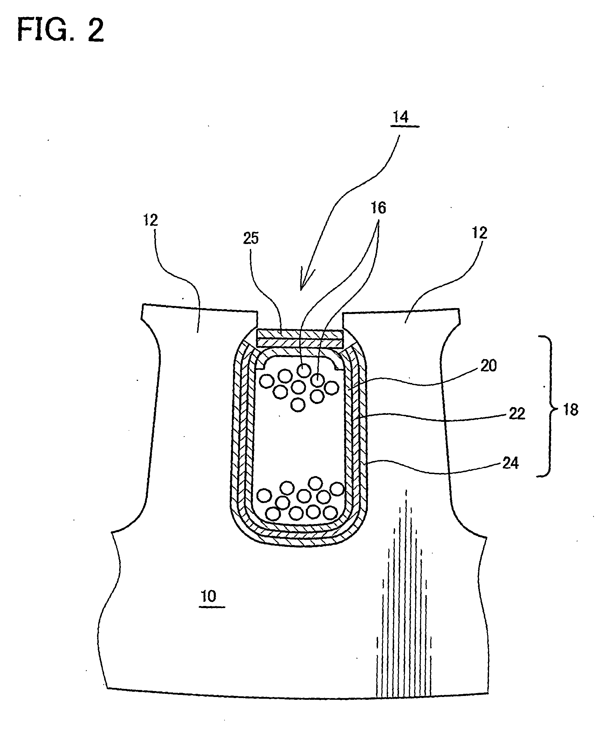

Fig. 2 is an enlarged diagram of one slot 14. A slot liner 18 is placed as an insulation member between the coil conductor 16 and the core 10 along the inner perimeter of the slot. The slot liner 18 is made of 3 layers, which will hereinafter be called, from the inside toward the outside, an inner layer 20, an intermediate layer 22, and an outer layer 24. The inner layer 20 and the outer layer 24 are each made of an insulation sheet of aggregated mica having a base member of aggregated mica. The intermediate layer 22 is made of an insulation sheet of peeled mica having a base member of peeled mica. In Fig. 2, the slot liner 18 is shown with the thickness being emphasized compared to the actual dimension in order to clearly show the structure of the slot liner 18. A wedge 25 is placed in an opening portion of the slot 14.

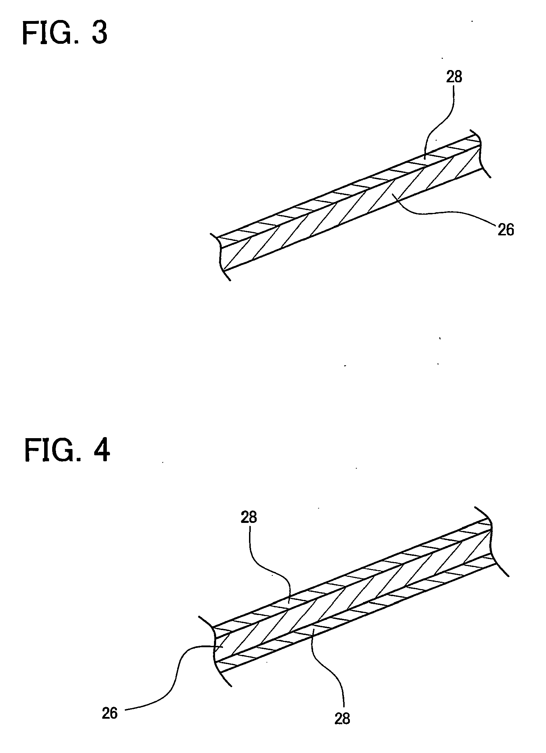

As shown in Fig. 3, insulation sheet of aggregated mica is formed by layering a base member sheet 26 in which flakes of mica are attached together through a resin and a glass cloth sheet 28 which is woven from glass fiber. As shown in Fig. 4, it is also possible to form the insulation sheet of aggregated mica by sandwiching the base member sheet 26 containing aggregated mica with two glass cloth sheets and layering the base member sheet and glass sheets. The intermediate layer 22 sandwiched between the inner layer 20 and the outer layer 24 is made of a base insulation sheet of peeled mica having a base member of peeled mica. The insulation sheet of peeled mica can also be made to have a layered structure of two layers or three layers including a base member sheet containing peeled mica and one or more glass cloth sheets, as shown in Figs. 3 and 4.

The insulation sheet of aggregated mica is flexible and can be easily engineered, but has a relatively low dielectric strength. The insulation sheet of peeled mica, on the other hand, has a high dielectric strength, but is easily broken when bent. In addition, from the viewpoint of cost, the insulation sheet of peeled mica is more expensive. By sandwiching an insulation sheet of peeled mica with two insulation sheets of aggregated mica to form a three-layered structure, the ease of engineering when the structure is inserted into a slot as a slot liner is improved. In other words, by sandwiching the insulation sheet of peeled mica which is easily broken with insulation sheets of aggregated mica having a relatively high mechanical strength, when the insulation sheets are to be bent, the insulation sheets of aggregated mica support the insulation sheet of peeled mica to prevent concentration of stress, to thereby prevent breakage. In addition, by using two insulation sheets of aggregated mica rather than using three insulation sheets of peeled mica, the overall cost can be reduced.

In this manner, insulation members and a slot liners can be constructed which have advantageous characteristics of both an insulation sheet of peeled mica and an insulation sheet of aggregated mica. In addition, an insulation sheet of aggregated mica has a superior varnish impregnation characteristic, and thus, it is possible to further improve the insulation property from this regard.

### DESCRIPTION OF A PREFERRED EMBODIMENT

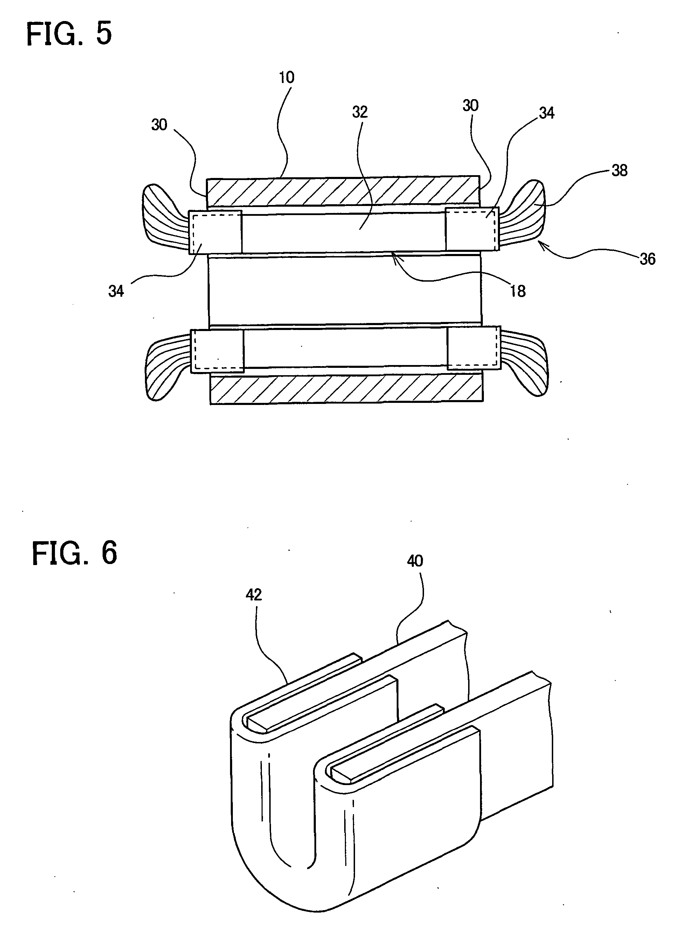

Fig. 5 is a schematic cross sectional view showing a stator of a rotary electrical machine seen from a direction perpendicular to the axis, wherein the cross section does not cut through the coil 36, the primary insulation sheet 32 and the reinforcement sheets 24. The slot liner 18 extends in a direction along the axis of the electrical motor and has a longer length than that of the core 10 such that the ends of the slot liner 18 protrude from end surfaces 30 of the core. The slot liner 18 comprises a primary insulation sheet 32 made of the mica insulation sheet of three-layered structure as described above which extends over the entire length of the slot liner 18 and reinforcement sheets 34 placed only on both ends. As shown in Fig. 5, the reinforcement sheet 34 is placed on the outer periphery of the primary insulation sheet 32. That is, the reinforcement sheet 34 is interposed between the main insulation sheet 32 and the core 10.

A coil end 38 which is a portion of a coil 36, stored within a core, extruding from the core end surface is formed, after the coil is formed, in a bent manner in the radial direction outside the rotary electrical machine as shown in Fig. 5. At this point, the portion of the slot liner 18 protruding from the core end surface 30 is pushed and bending load is generated. In particular, at the corner portions of the core end surface 30, a high stress is generated. The reinforcement sheet 34 distributes the stress, and, at the same time, reduces the stress applied onto the primary insulation sheet 32. In this manner, the reinforcement sheet 34 prevents breakage of the insulation sheet made of mica which is mechanically weak so as to ensure insulation.

The reinforcement sheet 34 is made of a polyimide resin. The heat resistance of the polyimide resin is extremely high. For example, the heat resistance of KAPTON (registered trademark) of DuPont has a heat resistance of around 400 °C. Because the polyimide resin has such a high heat resistance, the polyimide resin is not carbonized even under a high temperature environment, and thus, it is possible to ensure insulation.

As shown in Fig. 5, there is no reinforcement sheet 34 at portions of the slot liner 18 other than the ends. Therefore, the heat generated when an electric current flows through the coil conductors is transferred to the core 10 without passing through the reinforcement sheet 34. In other words, the reinforcement sheet 34 does not block heat transfer at the central portion of the core, which allows for high heat dissipating properties. In addition, although the polyimide resin is not carbonized at a temperature of 400 °C, the polyimide resin shrinks at higher temperatures. There is a problem in that this shrinkage causes reduction in contact tightness between the core and reinforcement sheet which in turn blocks heat transfer. The reinforcement sheet 34 is placed only in the ends of the slot liner 18 also considering this problem. In other words, if the reinforcement sheet 34 is placed only on the ends, even when the reinforcement sheet shrinks, heat transfer at the central portion is not blocked and the thermal discharge property can be maintained.

Fig. 6 is a diagram showing the structure of ends of a slot liner of the preferred embodiment of the invention. A primary insulation sheet 40 has a structure similar to the primary insulation sheet 28 described before. A reinforcement sheet 42 is placed on the end portions of the primary insulation sheet 40, that is, on the portions near the core ends. The reinforcement sheet 42 is folded so that the crease is positioned along the ends of the primary insulation sheet 40 such that the reinforcement sheet 42 is placed to cover the ends of the primary insulation sheet 40. In this manner, the ends of the primary insulation sheet 40 can be more firmly reinforced.

A slot liner according to the preferred embodiment of the present invention is particularly suited for use under a high temperature environment, for example, in a stator of an electrical motor of a canned motor pump which handles fluids of high temperature, but may also be used in other electrical machines with coils.

## Claims

1. A rotary electrical machine comprising a rotor including a rotational shaft, a stator including a core (10) in which a slot (14) is formed, and a slot liner (18) to be placed within the slot (14) of the core (10) for insulating a conductor (16) placed within the slot (14) and the core (10), the slot liner (18) comprising:
a primary insulation sheet (32, 40) placed extending along the direction of the shaft of the rotary electrical machine and having a length which is longer than that of the core (10); and
reinforcement sheets (34, 42) which are separately placed near ends of the core (10), are spaced from one another, and are placed overlapping a portion of the primary insulation sheet (32, 40) at positions of the primary insulation sheet (32, 40) including core end surfaces (30), the reinforcement sheets (34, 42) being placed at least between the core (10) and the primary insulation sheet (32, 40) for reinforcing the primary insulation sheet (32, 40) against a load applied to the primary insulation sheet (32, 40), **characterized in that**
each reinforcement sheet (34, 42) is folded, and a fold crease corresponds to an end of the primary insulation sheet (32, 40) to cover the end of the primary insulation sheet (32, 40), respectively, and
the primary insulation sheet (32, 40) is formed by layering at least one insulation sheet (22) of peeled mica having a base member of peeled mica and at least one insulation sheet (20, 24) of aggregated mica having a base member of aggregated mica.

2. The rotary electrical machine according to Claim 1, wherein the reinforcement sheet (34, 42) is made of polyimide.

3. The rotary electrical machine according to Claim 1, wherein the reinforcement sheet (34, 42) has a heat resistance of 400 °C or greater.

4. The rotary electrical machine according to Claim 1, wherein an insulation sheet (22) of peeled mica is sandwiched between and layered with two insulation sheets (20, 24) of aggregated mica.

## Patentansprüche

1. Elektrische Rotationsmaschine, aufweisend einen Rotor, der eine Drehachse beinhaltet, einen Stator, der einen Kern (10) beinhaltet, in dem eine Nut (14) ausgebildet ist, und eine Nutauskleidung (18), die innerhalb der Nut (14) des Kerns (10) zu platzieren ist, und zwar zum Isolieren eines in der Nut (14) platzierten Leiters (16) und des Kerns (10), wobei die Nutauskleidung (18) aufweist:
eine primäre Isolationsbahn (32, 40), die so angeordnet ist, dass sie sich entlang der Richtung der Achse der elektrischen Rotationsmaschine erstreckt und eine Länge aufweist, die größer als diejenige des Kerns (10) ist; und
Verstärkungsbahnen (34, 42), die separat in der Nähe von Enden des Kerns (10) angeordnet sind, mit Abstand zueinander angeordnet sind und so angeordnet sind, dass sie einen Abschnitt der primären Isolationsbahn (32, 40) bei Positionen der primären Isolationsbahn (32, 40), welche Stirnflächen (30) des Kerns beinhalten, überlappen, wobei die Verstärkungsbahnen (34, 42) zumindest zwischen dem Kern (10) und der primären Isolationsbahn (32, 40) angeordnet sind, um die primäre Isolationsbahn (32, 40) gegen eine Last zu verstärken, die auf die primäre Isolationsbahn (32, 40) aufgebracht wird, **dadurch gekennzeichnet, dass**
jede Verstärkungsbahn (34, 42) gefaltet ist, und ein Faltungskniff einem Ende der primären Isolationsbahn (32, 40) entspricht, um jeweils das Ende der primären Isolationsbahn (32, 40) zu bedecken, und
die primäre Isolationsbahn (32, 40) dadurch ausgebildet ist, dass mindestens eine Isolationsbahn (22) aus abgeschältem Glimmer, die ein Basiselement aus abgeschältem Glimmer aufweist, und mindestens eine Isolationsbahn (20, 24) aus aggregiertem Glimmer, die ein Basiselement aus aggregiertem Glimmer aufweist, übereinandergeschichtet angeordnet werden.

2. Elektrische Rotationsmaschine nach Anspruch 1, wobei die Verstärkungsbahn (34, 42) aus Polyimid besteht.

3. Elektrische Rotationsmaschine nach Anspruch 1, wobei die Verstärkungsbahn (34, 42) eine Wärmebeständigkeit von 400 °C oder mehr aufweist.

4. Elektrische Rotationsmaschine nach Anspruch 1, wobei eine Isolationsbahn (22) aus abgeschältem Glimmer sandwichartig zwischen zwei Isolationsbahnen (20, 24) aus aggregiertem Glimmer und übereinandergeschichtet mit diesen angeordnet ist.

## Revendications

1. Machine électrique rotative comprenant un rotor incluant un arbre rotatif, un stator incluant un noyau (10) dans lequel une encoche (14) est formée, et un caniveau d'encoche (18) devant être placé à l'intérieur de l'encoche (14) du noyau (10) pour isoler un conducteur (16) placé à l'intérieur de l'encoche (14) et du noyau (10), le caniveau d'encoche (18) comprenant : une feuille isolante primaire (32, 40) placée en s'étendant dans le sens de l'arbre de la machine électrique rotative et ayant une longueur qui est plus longue que celle du noyau (10) ; et des feuilles de renforcement (34, 42) qui sont placées séparément près des extrémités du noyau (10), sont espacées les unes des autres, et sont placées en chevauchant une portion de la feuille isolante primaire (32, 40) à des positions de la feuille isolante primaire (32, 40) comprenant des surfaces d'extrémité du noyau (30), les feuilles de renforcement (34, 42) étant placées au moins entre le noyau (10) et la feuille isolante primaire (32, 40) pour renforcer la feuille isolante primaire (32, 40) contre une charge appliquée à la feuille isolante primaire (32, 40), **caractérisée en ce que** chaque feuille de renforcement (34, 42) est pliée, et une pliure correspond à une extrémité de la feuille isolante primaire (32, 40) pour couvrir l'extrémité de la feuille isolante primaire (32, 40), respectivement, et la feuille isolante primaire (32, 40) est formée en superposant au moins une feuille isolante (22) de mica nu ayant un élément formant base de mica nu et au moins une feuille isolante (20, 24) de mica agrégé ayant un élément formant base de mica agrégé.

2. Machine électrique rotative selon la revendication 1, dans laquelle la feuille de renforcement (34, 42) est faite de polyimide.

3. Machine électrique rotative selon la revendication 1, dans laquelle la feuille de renforcement (34, 42) a une résistance à la chaleur de 400°C ou plus.

4. Machine électrique rotative selon la revendication 1, dans laquelle une feuille isolante (22) de mica nu est prise en sandwich entre et superposée avec deux feuilles isolantes (20, 24) de mica agrégé.
